# Europäisches Patentamt
# European Patent Office
# Office européen des brevets

(19)

(11) Veröffentlichungsnummer: **0 118 621**
**B1**

(12) # EUROPÄISCHE PATENTSCHRIFT

(45) Veröffentlichungstag der Patentschrift:
05.11.86

(51) Int. Cl.⁴: **C 02 F 3/28**

(21) Anmeldenummer: **83112970.5**

(22) Anmeldetag: **22.12.83**

(54) **Verfahren und Vorrichtung zum anaeroben Behandeln von Rohschlamm bzw. hochbelastetem Abwasser.**

(30) Priorität: **16.03.83 DE 3309299**

(43) Veröffentlichungstag der Anmeldung:
**19.09.84 Patentblatt 84/38**

(45) . Bekanntmachung des Hinweises auf die Patenterteilung:
**05.11.86 Patentblatt 86/45**

(84) Benannte Vertragsstaaten:
**AT BE CH FR LI LU NL**

(56) Entgegenhaltungen:
**EP-A-0 033 681**
**EP-A-0 078 919**
**CH-A-541 520**
**US-A-2 647 733**

(73) Patentinhaber: **KLÖCKNER- WERKE AKTIENGESELLSCHAFT, Klöcknerstrasse 29, D-4100 Duisburg 1 (DE)**

(72) Erfinder: **Der Erfinder hat auf seine Nennung verzichtet**

(74) Vertreter: **Kiefer, Winfried, Dipl.- Phys., Klöckner-Werke Aktiengesellschaft Patentabteilung Klöcknerstrasse 29, D-4100 Duisburg 1 (DE)**

EP 0 118 621 B1

LIBER, STOCKHOLM 1986

## Beschreibung

Die Erfindung betrifft ein Verfahren zum anaeroben Behandeln von Rohschlamm bzw. hochbelastetem Abwasser, insbesondere aus kommunalen Kläranlagen, wobei die Behandlung in mindestens zwei Reaktionsräumen in unterschiedlichem biochemischen Milieu erfolgt, in den Reaktionsräumen jeweils ein koaxial geführter Umlaufstrom durch einen, von diesem abgeteilten (abgezweigten) beschleunigten axial gerichteten Teilstrom aufrechterhalten wird.

Unter Rohschlamm sind im folgenden kummunale Klärschlämme und organisch hoch belastete, ausfaulbare Abwässer zu verstehen. In beiden Fällen handelt es sich um wässrige Lösungen von maximal 5 % organisch und/oder mineralisch gelösten Feststoffen.

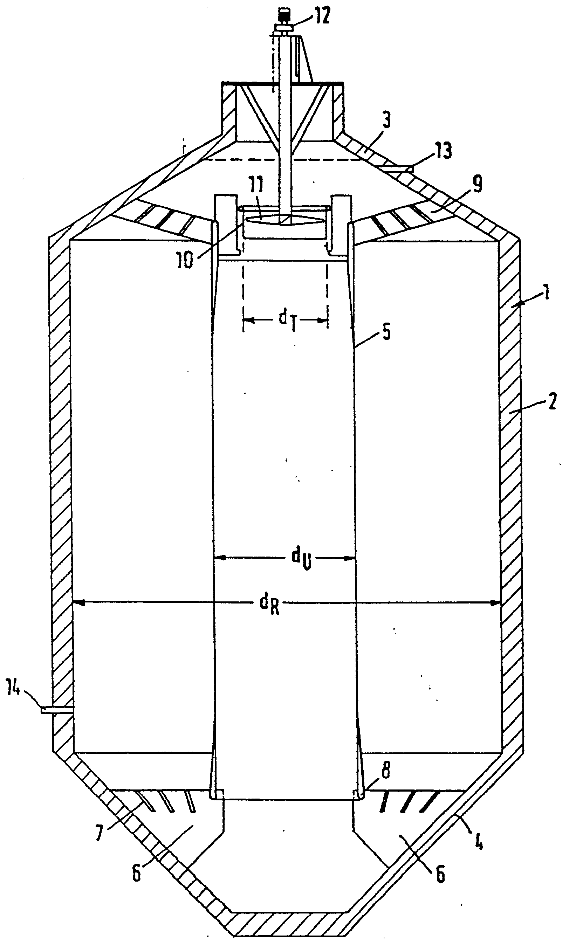

Es ist bekannt (Zeitschrift "Wasser und Boden", 1981, Heft 5, Seite 210 ff, insbesondere Fig. 6), das anaerobe Behandeln einstufig in Reaktoren durchzuführen, indem der Rohschlamm (das Abwasser) unten in den Reaktor eingeleitet und im oberen Bereich abgezogen wird. Das Abwasser fließt langsam durch den sich im unteren Teil des Reaktors befindlichen Anaerobschlamm. Die Durchmischung des Behälterinhaltes erfolgt einerseits durch das sich bildende Gas sowie den am Boden an verschiedenen Stellen angeordneten Düsen zum Zuführen des zu behandelnden Abwassers. Das behandelte Abwasser und der Schlamm werden im oberen Teil des Reaktors mittels Emscherrinnen getrennt. Prinzipiell ist beim Anaerobverfahren eine gewisse Mindestturbulenz in dem zu reinigenden Abwasser für den Substrat- und Sauerstoffwechselprodukten-Transport erforderlich. Neuere Untersuchungen führten zu dem Ergebnis, daß die Acetat- und die Methanbakterien in einer räumlich engen Symbiose die besten Abbauergebnisse erzielen. Eine Störung dieser Symbiose erfolgt dann, wenn die durch die Strömung ausgeübten Scherkräfte zu groß werden. Es ergaben sich somit die gegensätzlichen Forderungen, einerseits den Behälterinhalt gut zu durchmischen und andererseits die Scherkräfte möglichst gering zu halten. Die Frage der optimalen Durchmischung bei gleichzeitig minimalen Scherkräften, wirtschaftlichem Energieeinsatz und einfacher reparaturfreundlicher Installation sind bisher offen geblieben. Diese einstufigen Verfahren haben insbesondere den Nachteil, daß Verweilzeiten für den zu behandelnden Rohschlamm von 24 bis 30 Tagen im Reaktor erforderlich sind und dem gemäß die erforderlichen Reaktoren beachtliche Abmessungen aufweisen müssen. Große Mengen von anfallendem Rohschlamm können wirtschaftlich nicht behandelt werden.

Es sind weiterhin zweistufige Verfahren zum Behandeln von Abwässern bekannt (Zeitschrift "Korrespondenz Abwasser", 1980, Heft 1, Seiten 22 bis 27), die den Einsatz von mindestens zwei Behältern erfordern. Diesem zweistufigen Verfahren liegt die Vorstellung zugrunde, daß der anaerobe Abbau sich in zwei Stufen vollzieht, wobei die erste Stufe mesophil und die zweite Stufe thermophil abläuft. Nach neueren Erkenntnissen verläuft der anaerobe Prozeß erheblich komplizierter, so daß von da aus die vorausgesagten Ergebnisse des Zwei-Stufen-Modells nicht eintreten können. Bei dem zweistufigen Verfahren ist ebenfalls einerseits für hinreichend niedrige Scherkräfte zu sorgen, damit die Stoffwechselvorgänge möglichst ungestört ablaufen können.

Diese Zusammenhänge waren früher nicht bekannt, so daß das Augenmerk lediglich auf eine möglichst gute und rasche Durchmischung in den Behältern gerichtet war.

Aus der EP-A-78 919, die nicht vorveröffenlicht ist und nur zum Stand der Technik nach Artikel 54 (3) EPÜ gehört, ist ein Verfahren der eingangs erwähnten Art bekannt, gemäß dem zur Reduzierung der Faulzeit des Klärschlamms in den Rekationsräumen jeweils mindestens eine Umlaufstromführung mit einem Leitapparat und einem Axialstromrad angeordnet ist. Hierbei ist folgende Geometrie gewählt: Der düsenförmige Leitapparat ist konusartig mit gekrümmter Mantelfläche ausgebildet, wobei die dem Axialrad benachbarte Querschnittsfläche einen kleineren Durchmesser hat als das Axialrad. Insoweit ist verständlich, daß dieser Leitapparat distanziert oberhalb des Axialrades angeordnet ist. Der Leitapparat, das Axialrad und die Umlaufführung erzeugen einen koaxial geführten Umlaufstrom.

Der Erfindung liegt die Aufgabe zugrunde, dieses Verfahren so auszubilden, daß eine ausreichende Umwälzung für einen optimalen Substrat- und Stoffwechsel-Produkt-Transport gewährleistet ist und zu hohe, die Symbiose beeinträchtigende Scherkräfte vermieden werden.

Die Aufgabe wird erfindungsgemäß dadurch gelöst, daß das Verhältnis zwischen der Querschnittsfläche des Teilstroms $f_T$ und der durch die koaxiale Umlaufstromführung bestimmten inneren Querschnittsfläche des Umlaufstromes $f_U$ im Bereich

$$0,5 \;\geqq\; \frac{f_T}{f_U} \;\geqq\; 0,16$$

gewählt ist und der Inhalt der Reaktionsräume mindestens fünfmal pro Stunde umgewälzt wird.

Überraschenderweise zeigte es sich, daß hierdurch eine jeweils den gesamten Reaktionsraum erfassende Umlaufströmung niedriger Impulsdichte erzeugt wird, und daß die Symbiose der Bakterien nicht beeinträchtigt wird. Überraschend wird auch die mittlere Verweilzeit des zu behandelnden Rohschlammes in den Reaktionsräumen entscheidend herabgesetzt. Die optimalen Ergebnisse werden erfindungsgemäß dadurch erreicht, daß der vom Umlaufstrom abgeteilte (abgezweigte) Teilstrom einen Kreisquerschnitt hat, und das Verhältnis zwischen der Querschnittsfläche des Teilstroms $f_T$ und der durch die koaxiale Umlaufstromführung bestimmten inneren Querschnittsfläche des Umlaufstromes $f_U$ im Bereich

$$0,5 \geqq \frac{f_T}{f_U} \geqq 0,16$$

gewählt ist und der Inhalt der Reaktionsräume mindestens fünfmal pro Stunde umgewälzt wird.

Die Vorrichtung zur Durchführung des Verfahrens ist erfindungsgemäß dadurch gekennzeichnet, daß der Leitapparat ein Stromteiler ist, der Stromteiler koaxial zur Umlaufstromführung und teilweise in sie eintauchend angeordnet ist und daß das Axialstromrad koaxial innerhalb des Stromteilers angeordnet ist.

Es ist weiterhin bekannt (CH-A 541 520), den anfallenden Faulschlamm in einem Vorlaufraum zu beheizen und gleichzeitig intensiv umzuwälzen und den Faulschlamm anschließend durch Absetzen einzudicken. Zum Einsatz kommen ebenfalls Umlaufstromführungen, die in den Räumen angeordnet sind. Das Umwälzen wird mit Umwälzpumpen durchgeführt. Das Problem der optimalen Durchmischung und der geringen Scherkräfte ist jedoch nicht berücksichtigt.

Es ist auch bekannt (österr. Patentschrift 273 833) zum biologischen aeroben Reinigen von Abwässern in einem Becken koaxial zueinander mehrere Rohre zur Ausbildung von Ringräumen anzuordnen, die in wechselnder Richtung durchflossen werden. Das innere Rohr weist einen Antrieb auf, der die Flüssigkeit hochpumpt, die über die obere Kante des inneren Rohres in den ersten Ringraum strömt und von diesem in den nächstfolgenden unter entsprechender mehrfacher Umlenkung der Strömungsrichtung schließlich in das Becken strömt. Im Bereich der oberen Kante des inneren Rohres befinden sich Düsen, aus denen Luftblasen austreten und im ersten Ringraum von dem abwärts strömenden Abwasser mitgerissen werden. Die Strömungsgeschwindigkeit ist so vorgegeben, daß sie größer ist als die Auftriebsgeschwindigkeit der Luftblasen. Diese aerobe Behandlung von Abwasser erfordert zwangsläufig hohe Strömungsgeschwindigkeiten, um den Auftrieb der Luftblasen zu kompensieren. Das Problem, daß bei derart hohen Strömungsgeschwindigkeiten die Scherkräfte die Symbiose der an dem Reinigungsprozeß beteiligten Bakterien beeinträchtigen, ist hierbei völlig außer Acht gelassen. Hinzu tritt noch, daß der energetische Wirkungsgrad so gering ist, daß derartige Anlagen nicht mehr wirtschaftlich arbeiten können.

Die Erfindung ist in der Zeichnung anhand eines im Axialschnitt dargestellten Ausführungsbeispiels erläutert.

Mit 1 ist ein Behälter bezeichnet, der aus dem hohlzylinderförmigen Mittelabschnitt 2 und den sich konusartig verjüngenden Endabschnitt 3 und 4 besteht. In dem Behälter ist koaxial die Umlaufstromführung 5 angeordnet. Der konusartig sich verjüngende untere Bodenbereich des Behälters weist radial ausgerichtete Stützbleche 6 mit Einschnitten 7 auf, die die untere Stirnkante 8 der Umlaufstromführung umfassen. Ihr oberer Endabschnitt ragt in den sich konusartig verjüngenden oberen Bereich 3 und ist durch die Distanzbleche 9 auf seiner Außenseite mit der Innenwandung dieses oberen sich konusartig verjüngenden Bereich verbunden. In der Umlaufführung ist koaxial der Stromteiler 10 angeordnet. Im Stromteiler ist das höhenverstellbare Stromrad axialer Bauart 11 angeordnet, das mit einem auf dem Behälter angeordneten Getriebemotor 12 verkoppelt ist. Der obere sich konusartig verjüngende Bereich weist weiterhin eine Abflußleitung 13 zur kontinuierlichen Entnahme von gereinigtem Abwasser auf. Das erfindungsgemäße Verfahren wird folgendermaßen durchgeführt: Über die Zuflußleitung 14 strömt kontinuierlich Klärschlamm zu, während über die Abflußleitung 13 kontinuierlich die gleiche Menge an ausgefaultem Schlamm entnommen wird. Hierbei sind die Zuflußmenge und damit auch die Abflußmenge in Abhängigkeit vom Behältervolumen derart eingestellt, daß die mittlere Verweildauer des Schlammes mindestens 5 Tage beträgt. Aufgrund der sehr geringen Umdrehungsgeschwindigkeit des Stromrades axialer Bauart, wird im Behälter eine kontinuierliche Umlaufströmung erzeugt, die einer Umlaufgeschwindigkeit von mindestens 5 Umläufen pro Stunde entspricht. Diese extrem niedrige Umlaufgeschwindigkeit führt überraschenderweise dazu, daß keine die Symbiose störenden Scherkräfte in der Flüssigkeit auftreten, wobei andererseits die Umlaufgeschwindigkeit in allen Bereichen des Behälters ausreichend hoch ist, daß sehr gute Abbauleistungen erzielt und unerwünschte Sedimentationen vermieden werden. Ein besonderer Vorteil des erfindungsgemäßen Verfahrens liegt im extrem niedrigen Energiebedarf.

In der Figur sind der Durchmesser $d_U$ der Umlaufführung, $d_T$ des Stromleiters und $d_R$ des Reaktionsraumes eingezeichnet.

Die Querschnittsfläche des Teilstromes ist definiert durch diejenige des Stromteilers und die Querschnittsfläche $f_U$ ist definiert durch die Ringfläche zwischen dem Stromteiler und der Umlaufstromführung.

## Patentansprüche

1. Verfahren zum anaeroben Behandeln von Rohschlamm bzw. hochbelastetem Abwasser, insbesondere aus kommunalen Kläranlagen, wobei die Behandlung in mindestens zwei Reaktionsräumen in unterschiedlichem biochemischen Milieu erfolgt, in den Reaktionsräumen jeweils ein koaxial geführter Umlaufstrom durch einen, von diesem abgeteilten (abgezweigten) beschleunigten axial gerichteten Teilstrom aufrechterhalten wird, dadurch gekennzeichnet, daß das Verhältnis zwischen der Querschnittsfläche des Teilstroms $f_T$ und der durch die koaxiale Umlaufstromführung bestimmten inneren Querschnittsfläche des Umlaufstromes $f_U$ im Bereich

$$0,5 \leqq \frac{f_T}{f_U} \leqq 0,16$$

gewählt ist und der Inhalt der Reaktionsräume mindestens fünfmal pro Stunde umgewälzt wird.

2. Vorrichtung zur Durchführung des Verfahrens nach Anspruch 1, wobei in den Reaktionsräumen jeweils mindestens eine Umlaufstromführung mit einem Leitapparat und einem Axialstromrad angeordnet ist, dadurch gekennzeichnet, daß der Leitapparat ein Stromteiler (10) ist, der Stromteiler koaxial zur Umlaufstromführung (5) und teilweise in sie eintauchend angeordnet ist und daß das Axialstromrad (11) koaxial innerhalb des Stromteilers angeordnet ist. ˙En

## Claims

1. Process for the anaerobic treatment of raw sludge or heavily charged sewage, especially from domestic sewage treatment plants, the treatment taking place in at least two reaction chambers in different biochemical media and there being maintained in each reaction chamber a coaxially guided circulatory flow by an accelerated axially directed partial flow separated (derived) from the latter, characterised in that the ratio between the area of cross-section of the partial flow $f_T$ and the inner area of cross-section, determined by the coaxial circulatory flow guide means, of the circulatory flow $f_U$ is selected in the range

$$0.5 \leqq \frac{f_T}{f_U} \leqq 0.16$$

and the contents of the reaction chambers are circulated at least five times per hour.

2. Device for carrying out the process according to claim 1, there being arranged in each reaction chamber at least one circulatory flow guide means having a guiding apparatus and an axial flow wheel, characterised in that the guiding apparatus is a flow divider (10), the flow divider is arranged coaxially to the circulatory flow guide means (5) and partially immersed therein and the axial flow wheel (11) is arranged coaxially within the flow divider.

## Revendications

1. Procédé pour le traitement anaérobie de boues brutes ou d'eaux usées hautement polluées, provenant en particulier de stations d'épuration communales, ledit traitement s'effectuant dans au moins deux chambres réactionnelles à milieux biochimiques différents, dans chacune desquelles est maintenu, un courant de circulation dirigé coaxialement au moyen d'un courant partiel, dérivé dudit courant de circulation, accéléré et dirigé axialement, caractérisé par le fait que le rapport entre la surface de la section du courant partiel $f_T$ et la surface de la section intérieure du courant de circulation $f_U$ déterminé par la direction coaxiale du courant de circulation est choisi entre

$$0,5 \leqq \frac{f_T}{f_u} \leqq 0,16$$

et par le fait que le contenu des chambres réactionnelles effectue au moins cinq mouvements de rotation complète par heure.

2. Dispositif pour la mise en oeuvre du procédé selon la revendication 1, dans lequel on dispose dans chaque chambre réactionnelle, au moins un guidage du courant de circulation comprenant un appareil directeur et une roue mobile axiale, caractérisé par le fait que l'appareil directeur est un diviseur de flux (10), ledit diviseur de flux étant disposé coaxialement par rapport au guidage (5) du courant de circulation et de manière à y plonger partiellement et par le fait que la roue mobile axiale (11) est placée coaxialement à l'intérieur du diviseur de flux.

1/1